# EUROPEAN PATENT SPECIFICATION

(11) **EP 3 775 039 B1**
(45) Date of publication and mention of the grant of the patent: **30.11.2022**
(21) Application number: 19714226.8
(22) Date of filing: 04.04.2019
(51) Int. Cl.: C08L 51/04, C08L 69/00

(54) **GLASS FIBER REINFORCED THERMOPLASTIC COMPOSITIONS WITH GOOD MECHANICAL PROPERTIES**
GLASFASERVERSTÄRKTE THERMOPLASTISCHE ZUSAMMENSETZUNGEN MIT GUTEN MECHANISCHEN EIGENSCHAFTEN
COMPOSITIONS THERMOPLASTIQUES RENFORCÉES PAR DES FIBRES DE VERRE, PRÉSENTANT DE BONNES PROPRIÉTÉS MÉCANIQUES

(30) Priority: 09.04.2018 EP 18166403
(43) Date of publication of application: 17.02.2021
(73) Proprietor: Covestro Deutschland AG, 51373 Leverkusen (DE); Covestro LLC, Pittsburgh, PA 15205 (US)
(72) Inventor: WANDNER, Derk, Erich, 51519 Odenthal (DE); HOBEIKA, Sven, 42699 Solingen (DE); ECKEL, Thomas, 41540 Dormagen (DE); ROGUNOVA, Marina, Pittsburgh, PA 15241 (US)
(74) Representative: Levpat
(86) International application number: PCT/EP2019/058519
(87) International publication number: WO 2019/197270

(56) References cited:
- EP-A1- 2 574 642
- EP-B1- 2 574 642
- WO-A1-2013/045552
- WO-A1-2019/092018
- WO-A1-2019/092141

## Description

The present invention relates to thermoplastic compositions for the production of thermoplastic moulding materials, to a process for the production of thermoplastic moulding materials, to the moulding materials themselves, to the use of the compositions or moulding materials for the production of moulded articles, and to the moulded articles themselves.

The invention in particular relates to thermoplastic polycarbonate compositions.

Polycarbonate compositions have been known for a long time, and these materials are used to produce moulded articles for a wide variety of applications, for example in the automobile sector, for rail vehicles, for the construction sector, in the electrical/electronics sector and in domestic appliances.

It is also known that for some applications, in particular thin-walled parts, the stiffness of polycarbonate compositions is not sufficient. In many cases the technical solution for this deficiency is to include reinforcing agents into the compositions. Typically reinforcing agents are selected from glass carbon fibers or glass fibers or mineral fillers such as talc and wollastonite. The extent of the reinforcing effect depends on the aspect ratio of the selected filler. In terms of reinforcement and filler cost glass fibers provide an attractive balance and are therefore widely used in polycarbonate compositions.

WO 2009/021648 A1 discloses glass fiber reinforced polycarbonate compositions comprising polycarbonate, rubber-free vinyl copolymer, sized glass fiber and optionally rubber-modified graft polymers. The compositions provide high stiffness, high flowability, high processing stability, good chemical resistance and ageing stability.

US 2014/0329948 A1 discloses impact-modified and glass-fibre-reinforced polycarbonate compositions with high stiffness and good thermal and rheological properties in conjunction with good flame retardancy. The compositions comprise polycarbonate, flame retardant, glass fibres and an anhydride-modified alpha-olefin terpolymer.

Besides stiffness another important technical property of thermoplastic compositions is the ductility of moulded parts. The ductility can be evaluated in terms of strain at break in a tensile test, as impact strength according to Izod or Charpy or as multi-axial ductility (puncture energy and maximum force) in a dart penetration test. All kinds of ductility are potentially negatively affected by using glass fibers or other reinforcing fillers.

To compensate for the reduced ductility additional elastomeric components may be introduced into the polycarbonate compositions.

EP 0 624 621 A2 describes a thermoplastic resin composition comprising aromatic polycarbonate, rubber modified vinyl aromatic- vinyl cyanide graft polymer and treated glass fibers. The compositions exhibit enhanced mechanical properties.

WO 2013 / 045552 A1 discloses thermoplastic moulding materials made of polycarbonate and of inorganic fillers, comprising from 0.01 to 0.5 part by weight of at least one anhydride-modified alpha-olefin terpolymer and having a high level of stiffness and good ductility.

WO 2015 / 189761 discloses thermally conductive thermoplastic compositions comprising a polymer matrix, a chemically reactive impact modifier and a thermally conductive filler. A maleic-anhydride-grafted ethylene copolymer is disclosed as chemically reactive impact modifier. The compositions feature good thermal conductivity and ductility .

EP 2574642 A1 describes flame-retardant, thermoplastic molding composition comprising: at least one aromatic polycarbonate, at least one graft polymer, at least one vinyl (co)polymer, at least one phosphorus-containing flame retardant, at least one rubber-free anhydride-modified alpha -olefin terpolymer, at least one filler and other conventional additives. The compositions are characterized by good melt flowability, high notched impact strength and high chemical resistance and achieve UL94V-0 ratings.

Although the prior art demonstrates that good ductility can be achieved with the selected impact modifiers, in particular strain at break and multi-axial ductility are not sufficient for all applications.

It was therefore desirable to provide glass fiber reinforced thermoplastic compositions which have further improved balance of good strain at break, puncture energy and maximum force.

Surprisingly, it has now been found that compositions for the production of thermoplastic moulding materials, where the compositions comprise the following constituents:
A) at least one polymer selected from the group consisting of aromatic polycarbonate, aromatic polyester carbonate and polyester,
B) at least one anhydride-functionalized ethylene-α-olefin-copolymer or anhydride-functionalized ethylene-α-olefin terpolymer with a weight-average molar mass M_{w} determined by high-temperature gel permeation chromatography using ortho-dichlorobenzene as solvent against polystyrene standards of 50000 to 500000 g/mol, preferably of 10000 to 400000 g/mol, particularly preferably of 150000 to 350000 g/mol,
C) at least one rubber-modified graft polymer,
D) glass fibers
exhibit the advantageous properties.

The compositions preferably comprise
from 40 to 95% by weight, more preferably from 50 to 90% by weight, particularly preferably from 60 to 85% by weight of component A,
from 0.1 to 10% by weight, more preferably from 0.5 to 8% by weight, particularly preferably from 1 to 7% by weight of component B,
from 0.1 to 10% by weight, more preferably from 0.5 to 8% by weight, particularly preferably from 1 to 7% by weight of component C,
from 2 to 40% by weight, more preferably from 5 to 30 % by weight, particularly preferably from 10 to 25 % by weight of component D
and further comprising from 0 to 10% by weight, more preferably from 0.1 to 8 % by weight, particularly preferably from 0.2 to 5 % by weight of other polymeric constituents and/or polymer additives as component E.

In a preferred embodiment, the compositions consist of at least 90% by weight of components A to E. The compositions most preferably consist only of components A to E.

In a another embodiment the weight ratio of component B to component C is at least 1:1, more preferably at least 2:1.

Component B can take the form of physical mixture component in the composition.

It is also possible that the anhydride groups of component B enter into chemical reactions with polycarbonate (component A) and/or with other components of the composition.

The anhydride groups can also enter into chemical reactions with moisture or with other impurities. These reactions occur in particular in the melt at high temperatures of the type prevailing during compounding of the melt (e.g. in an extruder) and during processing by injection moulding.

The anhydride group content is thus reduced. Moulding materials considered to be inventive for the purposes of the present patent application also include those obtained when components A, B, C, D and optionally E are physically mixed and subjected to compounding in the melt.

### Component A

Polycarbonates for the purposes of the present invention are either homopolycarbonates or copolycarbonates and/or polyester carbonates; the polycarbonates can, as is known, be linear or branched. It is also possible according to the invention to use mixtures of polycarbonates.

The weight-average molar masses M_{w} of the thermoplastic polycarbonates, inclusive of the thermoplastic, aromatic polyester carbonates, determined by GPC (gel permeation chromatography in methylene chloride with polycarbonate as standard), is from 15000 g/mol to 50000 g/mol, preferably from 18000 g/mol to 35000 g/mol, more preferably from 20000 g/mol to 32000 g/mol, particularly preferably from 23000 g/mol to 31000 g/mol, very particularly preferably from 24000 g/mol to 31000 g/mol.

A portion, up to 80 mol%, preferably from 20 mol% to 50 mol%, of the carbonate groups in the polycarbonates used according to the invention can have been replaced by aromatic dicarboxylic ester groups. The term aromatic polyester carbonates is used for polycarbonates of this type comprising not only acid moieties derived from carbonic acid but also acid moieties of aromatic dicarboxylic acids incorporated into the molecular chain. For the purposes of the present invention, they are subsumed within the generic term thermoplastic aromatic polycarbonates.

The polycarbonates are produced in a known manner from diphenols, carbonic acid derivatives, optionally chain terminators and optionally branching agents, but for the production of the polyester carbonates a portion of the carbonic acid derivatives are replaced by aromatic dicarboxylic acids or derivatives thereof in accordance with the extent to which the carbonate structural units are to be replaced by aromatic dicarboxylic ester structural units in the aromatic polycarbonates.

Dihydroxyaryl compounds suitable for the production of polycarbonates are those of the formula (1)

HO-Z-OH (1),

in which
- Z: is an aromatic moiety having from 6 to 30 C atoms and can comprise one or more aromatic rings, can have substitution, and can comprise aliphatic or cycloaliphatic moieties or alkylaryl moieties or heteroatoms as bridging elements.

Z in formula (1) is preferably a moiety of the formula (2) 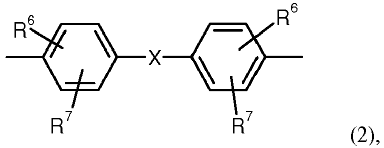 in which
- R⁶ and R⁷: are mutually independently H, C₁- to C₁₈-alkyl-, C₁- to C₁₈-alkoxy, halogen such as Cl or Br or respectively optionally substituted aryl or aralkyl, preferably H or C₁-to C₁₂-alkyl, particularly preferably H or C₁- to Cs-alkyl and very particularly preferably H or methyl, and
- X: is a single bond, -SO₂-, -CO-, -O-, -S-, C₁- to C₆-alkylene, C₂- to Cs-alkylidene or C₅- to C₆-cycloalkylidene which may have substitution by C₁- to C₆-alkyl, preferably methyl or ethyl, or else is C₆- to C₁₂-arylene, optionally fused to other aromatic rings comprising heteroatoms.
X is preferably a single bond, C₁- to C₅-alkylene, C₂- to C₅-alkylidene, C₅- to C₆-cycloalkylidene, - O-, -SO-, -CO-, -S-, -SO₂-.
or is a moiety of the formula (2a)

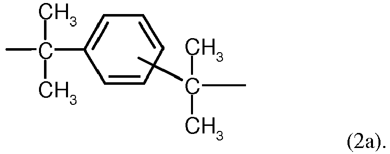

Examples of dihydroxyaryl compounds (diphenols) are: dihydroxybenzenes, dihydroxydiphenyls, bis(hydroxyphenyl)alkanes, bis(hydroxyphenyl)cycloalkanes, bis(hydroxyphenyl)aryls, bis(hydroxyphenyl) ethers, bis(hydroxyphenyl) ketones, bis(hydroxyphenyl) sulphides, bis(hydroxyphenyl) sulphones, bis(hydroxyphenyl) sulphoxides, 1,1'-bis(hydroxyphenyl)diisopropylbenzenes and ring-alkylated and ring-halogenated compounds derived therefrom.

Examples of diphenols suitable for the production of the polycarbonates to be used according to the invention are hydroquinone, resorcinol, dihydroxydiphenyl, bis(hydroxyphenyl)alkanes, bis(hydroxyphenyl)cycloalkanes, bis(hydroxyphenyl) sulphides, bis(hydroxyphenyl) ethers, bis(hydroxyphenyl) ketones, bis(hydroxyphenyl) sulphones, bis(hydroxyphenyl) sulphoxides, α,α'-bis(hydroxyphenyl)diisopropylbenzenes and alkylated, ring-alkylated and ring-halogenated compounds derived therefrom.

Preferred diphenols are 4,4'-dihydroxydiphenyl, 2,2-bis(4-hydroxyphenyl)-1-phenylpropane, 1,1-bis(4-hydroxyphenyl)phenylethane, 2,2-bis(4-hydroxyphenyl)propane, 2,4-bis(4-hydroxyphenyl)-2-methylbutane, 1,3-bis[2-(4-hydroxyphenyl)-2-propyl]benzene (bisphenol M), 2,2-bis(3-methyl-4-hydroxyphenyl)propane, bis(3,5-dimethyl-4-hydroxyphenyl)methane, 2,2-bis(3,5-dimethyl-4-hydroxyphenyl)propane, bis(3,5-dimethyl-4-hydroxyphenyl) sulphone, 2,4-bis(3,5-dimethyl-4-hydroxyphenyl)-2-methylbutane, 1,3-bis[2-(3,5-dimethyl-4-hydroxyphenyl)-2-propyl]benzene and 1,1-bis(4-hydroxyphenyl)-3,3,5-trimethylcyclohexane (bisphenol TMC).

Particularly preferred diphenols are 4,4'-dihydroxydiphenyl, 1,1-bis(4-hydroxyphenyl)phenylethane, 2,2-bis(4-hydroxyphenyl)propane (bisphenol A), 2,2-bis(3,5-dimethyl-4-hydroxyphenyl)propane, 1,1-bis(4-hydroxyphenyl)cyclohexane and 1,1-bis(4-hydroxyphenyl)-3,3,5-trimethylcyclohexane (bisphenol TMC).
2,2-Bis(4-hydroxyphenyl)propane (bisphenol A) is in particular preferred.

These and other suitable diphenols are described by way of example in US 2 999 835 A, US 3 148 172 A, US 2 991 273 A, US 3 271 367 A, US 4 982 014 A and US 2 999 846 A, in German laid-open specifications 1 570 703 A, 2 063 050 A, 2 036 052 A, 2 211 956 A and 3 832 396 A, in the French patent specification 1 561 518 A1, in the monograph by H. Schnell, "Chemistry and Physics of Polycarbonates", Interscience Publishers, New York 1964, pp. 28ff and pp. 102ff., and in D.G. Legrand, J.T. Bendler, "Handbook of Polycarbonate Science and Technology", Marcel Dekker, New York, 2000, pp. 72ff.

In the case of the homopolycarbonates, only one diphenol is used; in the case of copolycarbonates, two or more diphenols are used. The diphenols used, and also all of the other chemicals and auxiliaries added to the synthesis, can comprise contamination from the impurities arising during the synthesis, handling and storage of the same. However, it is desirable to use raw materials of the highest possible purity.

The monofunctional chain terminators required for molecular-weight regulation, for example phenols or alkylphenols, in particular phenol, p-tert-butylphenol, isooctylphenol, cumylphenol, chloroformic esters of these, or acyl chlorides of monocarboxylic acids, or mixtures of these chain terminators, are either introduced with the bisphenolate(s) into the reaction or else are added to the synthesis at any desired juncture while phosgene or terminal chloroformic acid groups are still present in the reaction mixture or, in the case of the acyl chlorides and chloroformic esters as chain terminators, as long as a sufficient quantity of terminal phenolic groups of the resulting polymer is available. However, it is preferable that the chain terminator(s) is/are added after the phosgenation procedure at a location/juncture at which phosgene is no longer present but the catalyst has not yet been metered into the system, or that they are metered into the system before the catalyst or in parallel or together with the catalyst.

Any branching agents or branching agent mixtures to be used are added to the synthesis in the same manner, but usually before the chain terminators. Compounds usually used are trisphenols, quaterphenols or acyl chlorides of tri- or tetracarboxylic acids, or else mixtures of the polyphenols or of the acyl chlorides.

Examples of some of the compounds that can be used as branching agents having three, or more than three, phenolic hydroxy groups are phloroglucinol, 4,6-dimethyl-2,4,6-tri(4-hydroxyphenyl)hept-2-ene, 4,6-dimethyl-2,4,6-tri-(4-hydroxyphenyl)heptane, 1,3,5-tris(4-hydroxyphenyl)benzene, 1,1,1-tri-(4-hydroxyphenyl)ethane, tris(4-hydroxyphenyl)phenylmethane, 2,2-bis[4,4-bis(4-hydroxyphenyl)cyclohexyl]propane, 2,4-bis(4-hydroxyphenylisopropyl)phenol, tetra(4-hydroxyphenyl)methane.

Some of the other trifunctional compounds are 2,4-dihydroxybenzoic acid, trimesic acid, cyanuryl chloride and 3,3-bis(3-methyl-4-hydroxyphenyl)-2-oxo-2,3-dihydroindole.

Preferred branching agents are 3,3-bis(3-methyl-4-hydroxyphenyl)-2-oxo-2,3-dihydroindole and 1,1,1-tri(4-hydroxyphenyl)ethane.

The quantity of the branching agents optionally to be used is from 0.05 mol% to 2 mol%, again based on moles of diphenols respectively used.

The branching agents can either be initially charged together with the diphenols and the chain terminators in the aqueous alkaline phase or added in solution in an organic solvent before the phosgenation procedure.

All of these measures for production of the polycarbonates are familiar to those skilled in the art.

Examples of suitable aromatic dicarboxylic acids for the production of the polyester carbonates are orthophthalic acid, terephthalic acid, isophthalic acid, tert-butylisophthalic acid, 3,3'-diphenyldicarboxylic acid, 4,4'-diphenyldicarboxylic acid, 4,4-benzophenonedicarboxylic acid, 3,4'-benzophenonedicarboxylic acid, 4,4'-diphenyl ether dicarboxylic acid, 4,4'-diphenyl sulphone dicarboxylic acid, 2,2-bis(4-carboxyphenyl)propane, trimethyl-3-phenylindane-4,5'-dicarboxylic acid.

Particular preference is given to use of terephthalic acid and/or isophthalic acid among the aromatic dicarboxylic acids.

Derivatives of the dicarboxylic acids are the diacyl dihalides and the dialkyl dicarboxylates, in particular the diacyl dichlorides and the dimethyl dicarbonates.

Replacement of the carbonate groups by the aromatic dicarboxylic ester groups is in essence stoichiometric, and also quantitative, and the molar ratio of the reactants is therefore also maintained in the finished polyester carbonate. The aromatic dicarboxylic ester groups can be incorporated either randomly or blockwise.

Preferred modes of production of the polycarbonates to be used according to the invention, inclusive of the polyester carbonates, are the known interfacial process and the known melt transesterification process (cf. e.g. WO 2004/063249 A1, WO 2001/05866 A1, WO 2000/105867, US 5,340,905 A, US 5,097,002 A, US-A 5,717,057 A).

In the first case the acid derivatives used are preferably phosgene and optionally diacyl dichlorides; in the latter case they are preferably diphenyl carbonate and optionally dicarboxylic diesters. Catalysts, solvents, work-up, reaction conditions, etc. have been sufficiently well described and are known both for the production of polycarbonate and for the production of polyester carbonate.

Polyesters according to the invention are preferably polyalkylene terephthalates. In a particularly preferred embodiment, these are reaction products of aromatic dicarboxylic acids or reactive derivatives thereof, such as dimethyl esters or anhydrides, and aliphatic, cycloaliphatic or araliphatic diols and mixtures of these reaction products.

Particularly preferred polyalkylene terephthalates contain at least 80% by weight, preferably at least 90% by weight, based on the dicarboxylic acid component, of terephthalic acid radicals and at least 80% by weight, preferably at least 90% by weight, based on the diol component, of ethylene glycol and/or butane-1,4-diol radicals.

The preferred polyalkylene terephthalates may, as well as terephthalic acid radicals, contain up to 20 mol%, preferably up to 10 mol%, of radicals of other aromatic or cycloaliphatic dicarboxylic acids having 8 to 14 carbon atoms or of aliphatic dicarboxylic acids having 4 to 12 carbon atoms, for example radicals of phthalic acid, isophthalic acid, naphthalene-2,6-dicarboxylic acid, 4,4'-diphenyldicarboxylic acid, succinic acid, adipic acid, sebacic acid, azelaic acid, cyclohexanediacetic acid.

The preferred polyalkylene terephthalates may, as well as ethylene glycol and butane-1,4-diol radicals, contain up to 20 mol%, preferably up to 10 mol%, of other aliphatic diols having 3 to 12 carbon atoms or cycloaliphatic diols having 6 to 21 carbon atoms, for example radicals of propane-1,3-diol, 2-ethylpropane-1,3-diol, neopentyl glycol, pentane-1,5-diol, hexane-1,6-diol, cyclohexane-1,4-dimethanol, 3-ethylpentane-2,4-diol, 2-methylpentane-2,4-diol, 2,2,4-trimethylpentane-1,3-diol, 2-ethylhexane-1,3-diol, 2,2-diethylpropane-1,3-diol, hexane-2,5-diol, 1,4-di(β-hydroxyethoxy)-benzene, 2,2-bis(4-hydroxycyclohexyl)propane, 2,4-dihydroxy-1,1,3,3-tetramethylcyclobutane, 2,2-bis(4-β-hydroxyethoxyphenyl)propane and 2,2-bis(4-hydroxypropoxyphenyl)propane (DE-A 2 407 674, 2 407 776, 2 715 932).

The polyalkylene terephthalates can be branched by incorporation of relatively small amounts of 3- or 4-hydric alcohols or 3- or 4-basic carboxylic acids, for example according to DE-A 1 900 270 and US-A 3 692 744. Examples of preferred branching agents are trimesic acid, trimellitic acid, trimethylolethane and -propane and pentaerythritol.

Particular preference is given to polyalkylene terephthalates which have been prepared solely from terephthalic acid and the reactive derivatives thereof (e.g. the dialkyl esters thereof) and ethylene glycol and/or butane-1,4-diol, and mixtures of these polyalkylene terephthalates.

The polyalkylene terephthalates used with preference preferably have an intrinsic viscosity of 0.4 to 1.5 dl/g, preferably 0.5 to 1.2 dl/g in an Ubbelohde viscometer, measured in dichloroacetic acid in a concentration of 1% by weight at 25°C to DIN 53728-3. The intrinsic viscosity determined is calculated from the measured specific viscosity x 0.0006907 + 0.063096.

The polyalkylene terephthalates can be prepared by known methods (see, for example, Kunststoff-Handbuch [Plastics Handbook], volume VIII, p. 695 ff., Carl-Hanser-Verlag, Munich 1973).

In a preferred embodiment, component A used consists of aromatic polycarbonate, most preferably an aromatic polycarbonate with bisphenol A as diphenol unit.

### Component B

Component B used comprises ethylene-α-olefin copolymers or terpolymers with grafted-on anhydride groups. For the purposes of this patent application, component B is also referred to as ethylene-α-olefin copolymer or terpolymer functionalized with anhydride groups.

The anhydride is preferably selected from the group comprising maleic anhydride, phthalic anhydride, fumaric anhydride and itaconic anhydride, and also mixtures of these. Maleic anhydride is particularly preferred as anhydride.

The copolymers or terpolymers comprise alongside ethylene as comonomer (a-olefin) preferably 1-propene, 1-butene, 1-isobutene, 1-pentene, 1-hexene, 1-heptene, 1-octene, 1-nonene, 1-decene, 1-undecene, 1-dodecene, 1-tridecene, 1-tetradecene, 1-octadecene, 1-nonadecene, and also mixtures of these.

In particular, a copolymer of ethylene and 1-octene is used.

The olefinic copolymers can be produced as described in US 5272236 A and US 5278272 A. Grafting with anhydride groups is described by way of example in US 323691 A.

The α-olefin comonomer content is preferably from 2 to 40 mol%, more preferably from 5 to 35 mol% and particularly preferably from 10 to 25 mol%, based in each case on the entirety of ethylene and the comonomer(s).

The ethylene-α-olefin copolymers or terpolymers described are preferably random copolymers.

The copolymers or terpolymers having grafted-on anhydride groups can be subjected to incipient crosslinking as described in WO 98/02489 in order to optimize elastomeric properties.

The proportions of ethylene and of the comonomers can be determined by ¹H and ¹³C NMR spectroscopy in trichloroethane as solvent.

The anhydride-modified polymer is preferably characterized by the following composition:
B(1) from 90.0% to 99.99% by weight, more preferably from 97.0% to 99.99% by weight and particularly preferably from 99.0% to 99.8% by weight of copolymer or terpolymer,
B(2) from 0.01 to 10.0% by weight, more preferably from 0.1 to 3.0% by weight and particularly preferably from 0.2 to 1.0% by weight of anhydride.

In an embodiment to which further preference is given, the main chain of component B consists of a random copolymer made of ethylene and 1-octene units.

The weight-average molar mass Mw of the anhydride-modified copolymer or terpolymer is from more than 50000 to 500000 g/mol, preferably from 100000 to 400000 g/mol and particularly preferably from 150000 to 350000 g/mol, determined in each case by HTGPC (high-temperature gel permeation chromatography) with ortho-dichlorobenzene as solvent against polystyrene standards.

The glass transition temperatures of the preferred products are -50°C or lower.

Glass transition temperature is determined by differential scanning calorimetry (DSC) in accordance with the standard DIN EN 61006 (2004 version) at a heating rate of 10 K/min, T_{g} being defined as mid-point temperature (tangent method).

### Component C

The composition comprise as component C a rubber-modified graft polymer or a mixture of ruber-modified graft polymers.

### Rubber-modified graft polymers C comprise

| | |
|---|---|
| C.1 | from 5 to 95 % by weight, preferably from 15 to 92 % by weight, in particular from 25 to 60 % by weight, based on component C, of at least one vinyl monomer on |
| C.2 | from 95 to 5 % by weight, preferably from 85 to 8 % by weight, in particular from 75 to 40 % by weight, based on component C, of at least one elastomeric graft substrate, preferably having glass transition temperatures < 10°C, more preferably < 0°C, particularly preferably < -20°C. |

The glass transition temperature T_{g} is determined by means of differential scanning calorimetry (DSC) according to standard DIN EN 61006 at a heating rate of 10 K/min. with definition of the T_{g} as the mid-point temperature (tangent method).

The elastomeric graft base is also referred to as rubber core.

The graft substrate (also referred to as graft base) C.2 generally has a mean particle size (dso value) of from 0.05 to 10 µm, preferably from 0.1 to 5 µm, particularly preferably from 0.2 to 1 µm.

The mean particle size d₅₀ is the diameter above and below which in each case 50 % by weight of the particles lie. It can be determined by ultracentrifuge measurement (W. Scholtan, H. Lange, Kolloid, Z. und Z. Polymere 250 (1972), 782-1796).

Monomers C.1 are preferably mixtures of

| | |
|---|---|
| C.1.1 | from 50 to 99 parts by weight, preferably from 60 to 80 parts by weight, in particular from 70 to 80 parts by weight, based on C.1, of vinyl aromatic compounds and/or vinyl aromatic compounds substituted on the ring (such as styrene, α-methylstyrene, p-methylstyrene, p-chlorostyrene) and/or methacrylic acid (C₁-C₈)-alkyl esters, such as methyl methacrylate, ethyl methacrylate, and |
| C.1.2 | from 1 to 50 parts by weight, preferably from 20 to 40 parts by weight, in particular from 20 to 30 parts by weight, based on C.1, of vinyl cyanides (unsaturated nitriles such as acrylonitrile and methacrylonitrile) and/or (meth)acrylic acid (C₁-C₈)-alkyl esters, such as methyl methacrylate, n-butyl acrylate, tert-butyl acrylate, and/or derivatives (such as anhydrides and imides) of unsaturated carboxylic acids, for example maleic anhydride and N-phenyl-maleimide. |

Preferred monomers C.1.1 are selected from at least one of the monomers styrene, α-methylstyrene and methyl methacrylate, and preferred monomers C.1.2 are selected from at least one of the monomers acrylonitrile, maleic anhydride and methyl methacrylate. Particularly preferred monomers are C.1.1 styrene and C.1.2 acrylonitrile or C.1.1=C.1.2 methylmethacrylate.

Graft substrates C.2 suitable for the graft polymers C are, for example, diene rubbers, diene-vinyl block copolymer rubbers, EP(D)M rubbers, i.e. those based on ethylene/propylene and optionally diene, acrylate rubbers, polyurethane rubbers, silicone rubbers, chloroprene rubbers and ethylene/vinyl acetate rubbers, and also mixtures of such rubbers or silicone-acrylate composite rubbers in which the silicone and acrylate components are chemically joined to one another (for example by grafting).

Preferred graft substrates C.2 are diene rubbers (for example based on butadiene or isoprene), diene-vinyl block copolymer rubbers (for example based on butadiene and styrene blocks), copolymers of diene rubbers with further copolymerizable monomers (for example according to C1.1 and C1.2) and mixtures of the abovementioned rubber types. Particular preference is given to pure polybutadiene rubber and styrene-butadiene block copolymer rubber.

Pure polybutadiene rubber and styrene-butadiene-block copolymers rubber are particularly preferred as the graft substrate C.2.

Particularly preferred polymers C are, for example, ABS or MBS polymers, as are described, for example, in DE-OS 2 035 390 (= US-PS 3 644 574) or in DE-OS 2 248 242 (= GB-PS 1 409 275) or in Ullmanns, Enzyklopädie der Technischen Chemie, Vol. 19 (1980), p. 280 ff.

The graft copolymers C are prepared by radical polymerisation, for example by emulsion, suspension, solution or mass polymerisation, preferably by emulsion or mass polymerisation, in particular by emulsion polymerisation.

The gel content of the graft base C.2 is at least 30 % by weight, preferably at least 40 % by weight, in particular at least 60 % by weight, in each case based on C.2 and measured as the insoluble portion in toluene.

The gel content of the graft base C.2 is determined at 25°C in a suitable solvent as the portion insoluble in those solvents (M. Hoffmann, H. Krömer, R. Kuhn, Polymeranalytik I und II, Georg Thieme-Verlag, Stuttgart 1977).

Particularly suitable graft bases are also ABS polymers, which are prepared by redox initiation with an initiator system of organic hydroperoxide and ascorbic acid according to US-P 4 937 285.

Because, as is known, the graft monomers are not necessarily grafted completely onto the graft base in the graft reaction, graft polymers Care also understood according to the invention as being products that are obtained by (co)polymerisation of the graft monomers in the presence of the graft base and are obtained concomitantly on working up. Such products can accordingly also contain free (co)polymer of the graft monomers, that is to say (co)polymer that is not chemically bonded to the rubber.

Suitable acrylate rubbers according to C.2 are preferably polymers of acrylic acid alkyl esters, optionally with up to 40 % by weight, based on C.2, of other polymerisable, ethylenically unsaturated monomers. The preferred polymerisable acrylic acid esters include C₁- to Cs-alkyl esters, for example methyl, ethyl, butyl, n-octyl and 2-ethylhexyl ester; haloalkyl esters, preferably halo-C₁-C₈-alkyl esters, such as chloroethyl acrylate, as well as mixtures of those monomers.

Further suitable graft bases according to C.2 are silicone rubbers having graft-active sites, as are described in DE-OS 3 704 657, DE-OS 3 704 655, DE-OS 3 631 540 and DE-OS 3 631 539.

### Component D

The compositions comprise as component D glass fibers.

The glass fibers may be endless fibers (rovings), long glass fibers and cut glass fibers. Cut glass fibers are preferred.

The glass fibers are produced from M-, E-, S-, R- or C-glass, E- and C-glass are preferred.

The fiber diameter is preferably from 5 to 25 µm, further preferably 6 to 20 µm, particularly preferably 7 to 17 µm.

The cut glass fibers preferably have a length before compounding of from 0.5 to 10 mm, more preferably of from 1 to 8 mm, particularly preferably of from 3 to 6 mm.

The glass fibers may have different cross sections. Preferred are round shaped, ellipsoid, oval, octagonal and flat cross sections, particularly preferred are round shaped and oval cross sections.

The abovementioned geometric features of the glass fibers (length and diameter) are determined on the component D used (i.e. before the production and further thermal processing of the composition of the invention). During the production of the compositions by compounding and during further thermal processing thereof to give mouldings, it is naturally not possible to exclude reduction of the said fiber length resulting from shearing for example, and the length of the glass fibers in the final composition or indeed in the moulding is therefore generally smaller than that originally determined on the component D used.

The glass fibers according to component D preferably have a coating of a size (sizing) which comprises at least one organic substance or a combination of a plurality of organic substances which can have some extent of chemical bonding to the glass fiber (coupling agents) and which to some extent are present in unbonded form, i.e. achieved physical wetting of the glass fiber without bonding (film-formers, surface-active additives, lubricants, etc.). The unbonded size content, i.e. the content not chemically linked to the glass fibre, can be separated by means of extraction, for example, preferably in dichloromethane, and can be analysed.

The sizing may be an epoxy based sizing, a polyurethane sizing or an silane sizing or mixtures of these sizing.

The choice of glass fibers is not limited by the interaction characteristics of the fibers with the thermoplastic matrix which is preferably a polycarbonate matrix.

### Component E

The composition can comprise, as component E, one or more further additives, preferably selected from the group consisting of flame retardants (e.g. organic phosphorus or halogen compounds, in particular bisphenol-A-based oligophosphate), anti-drip agents (for example compounds from the classes of fluorinated polyolefins, the silicones, and also aramid fibres), flame retardant synergists (for example nanoscale metal oxides), smoke inhibitors (for example zinc borate), lubricants and demoulding agents (for example pentaerythritol tetrastearate), nucleating agents, antistats, conductivity additives, stabilizers (e.g. hydrolysis, heat-ageing and UV stabilizers, and also transesterification inhibitors and acid/base quenchers), flow promoters, compatibilizers, other polymeric constituents (for example polyesters or vinyl (co)polymers or functional blend components), fillers and reinforcing materials different from component D (for example carbon fibres, talc, mica, kaolin, CaCO₃) and also dyes and pigments (for example titanium dioxide or iron oxide).

In a preferred embodiment, the composition is free from flame retardants, anti-drip agents, flame retardant synergists and smoke inhibitors.

In a preferred embodiment, the composition comprises at least one polymer additive selected from the group consisting of lubricants and demoulding agents, stabilizers, flow promoters, compatibilizers, other polymeric constituents, dyes and pigments.

In a preferred embodiment, the composition comprises at least one polymer additive selected from the group consisting of lubricants/demoulding agents and stabilizers.

In a preferred embodiment, the composition comprises pentaerythritol tetrastearate as demoulding agent.

In a preferred embodiment, the composition comprises as stabilizer, at least one representative selected from the group consisting of sterically hindered phenols, organic phosphites, sulfur-based co-stabilizers and organic and inorganic Brønsted acids.

In a particularly preferred embodiment, the composition comprises as stabilizer at least one representative selected from the group consisting of octadecyl 3-(3,5-di-tert-butyl-4-hydroxyphenyl)propionate and tris(2,4-di-tert-butylphenyl) phosphite.

Particularly preferred compositions comprise pentaerythritol tetrastearate as demoulding agent, at least one representative selected from the group consisting of octadecyl 3-(3,5-di-tert-butyl-4-hydroxyphenyl)propionate and tris(2,4-di-tert-butylphenyl) phosphite as stabilizer, and optionally a Brønsted acid, and are free from other polymer additives.

Compositions to which preference is further given comprise pentaerythritol tetrastearate as demoulding agent, a combination of octadecyl 3-(3,5-di-tert-butyl-4-hydroxyphenyl)propionate and tris(2,4-di-tert-butylphenyl) phosphite as stabilizer, and optionally a Brønsted acid, and are free from other polymer additives.

### Production of the moulding materials and mouldings

The compositions according to the invention can be used to produce thermoplastic moulding materials.

The thermoplastic moulding materials according to the invention can by way of example be produced by mixing the respective constituents in a known manner and compounding in the melt, and extruding in the melt, at temperatures which are preferably from 200°C to 340°C, particularly preferably from 240 to 320°C and very particularly preferably from 240°C to 300°C, in conventional assemblies such as internal mixers, extruders and twin-shaft screw systems. For the purposes of this application, this process is generally termed compounding.

The procedure here is that at least component A is melted, all of the constituents of the composition are dispersed and/or dissolved in one another, and in a further step the resultant melt is solidified by cooling and optionally pelletized. The steps of solidification and pelletization can be carried out in any desired order.

The term moulding material therefore means the product that is obtained when the constituents of the composition are compounded in the melt and extruded in the melt.

The individual constituents can be mixed in a known manner either in succession or else simultaneously, and specifically either at about 20°C (room temperature) or else at a higher temperature. It is therefore possible by way of example that some of the constituents are metered into the system by way of the main intake of an extruder and that the remaining constituents are introduced subsequently in the compounding process by way of an side extruder.

In particular, it may be advantageous to introduce component D by way of an side extruder

The invention also provides a process for the production of the moulding materials of the invention.

The moulding materials of the invention can be used for the production of moulded articles of any type. These can by way of example be produced by injection moulding, extrusion and blow-moulding processes. Another type of processing is the production of mouldings by thermoforming from prefabricated sheets or films.

Examples of these moulded articles are films, profiles, housing parts of any type, e.g. for domestic appliances such as juice presses, coffee machines, mixers; for office equipment such as monitors, flatscreens, notebooks, printers, copiers; sheets, pipes, electrical installation ducts, windows, doors and other profiles for the construction sector (internal fitout and external applications), and also electrical and electronic components such as switches, plugs and sockets, and component parts for commercial vehicles, in particular for the automobile sector. The compositions according to the invention are also suitable for the production of the following moulded articles: Internal fit out parts for rail vehicles, ships, aircraft, buses and other motor vehicles, bodywork components for motor vehicles, housings of electrical equipment containing small transformers, housings for equipment for the processing and transmission of information, housings and cladding for medical equipment, massage equipment and housings therefor, toy vehicles for children, sheet-like wall elements, housings for safety equipment, thermally insulated transport containers, moulded parts for sanitation and bath equipment, protective grilles for ventilation openings and housings for garden equipment.

Further embodiments 1 to 35 of the present invention are described below:
1. Compositions for the production of thermoplastic moulding materials, wherein the compositions comprise the following components:
   A) at least one polymer selected from the group consisting of aromatic polycarbonate, aromatic polyester carbonate and polyester,
   B) at least one anhydride-functionalized ethylene-α-olefin-copolymer or anhydride-functionalized ethylene-α-olefin terpolymer with a weight-average molar mass M_{w} determined by high-temperature gel permeation chromatography using ortho-dichlorobenzene as solvent against polystyrene standards of 50000 to 500000 g/mol,
   C) at least one rubber-modified graft polymer,
   D) glass fibers.
2. Compositions according to embodiment 1, wherein component B has from 2 to 40 mol% of α-olefin units and from 60 to 98 mol% of ethylene units, based on the entirety of α-olefin and ethylene.
3. Compositions according to embodiment 1 or 2, wherein component B has from 5 to 35 mol% of α-olefin units and from 65 to 95 mol% of ethylene units, based on the entirety of α-olefin and ethylene.
4. Compositions according any of the preceding embodiments, wherein component B has from 10 to 25 mol% of α-olefin units and from 75 to 90 mol% of ethylene units, based on the entirety of α-olefin and ethylene.
5. Compositions according to any of the preceding embodiments, wherein the anhydride content of component B is from 0.01 to 10.0% by weight.
6. Compositions according to any of the preceding embodiments, wherein the anhydride content of component B is from 0.1 to 3.0% by weight.
7. Compositions according to any of the preceding embodiments, wherein the anhydride content of component B is from 0.2 to 1.0% by weight.
8. Compositions according to any of the preceding embodiments, wherein component B is maleic-anhydride-functionalized ethylene-α-olefin-copolymer or maleic-anhydride-functionalized ethylene-α-olefin Terpolymer.
9. Compositions according to any of the preceding embodiments, wherein component B is a maleic-anhydride-functionalized copolymer of ethylene and 1-octene.
10. Compositions according to any of the preceding embodiments, wherein component B has a weight-average molar mass M_{w} determined by high-temperature gel permeation chromatography using ortho-dichlorobenzene as solvent against polystyrene standards of 100000 to 400000 g/mol.
11. Compositions according to any of the preceding embodiments, wherein component B has a weight-average molar mass M_{w} determined by high-temperature gel permeation chromatography using ortho-dichlorobenzene as solvent against polystyrene standards of 150000 to 350000 g/mol.
12. Compositions according to any of the preceding embodiments, wherein component A consists of aromatic polycarbonate.
13. Compositions according to any of the preceding embodiments, wherein component C is at least one graft polymer of
   C.1 5 to 95 % by weight of at least one vinyl monomer on
   C.2 5 to 95 % by weight of a one or more elastomeric graft bases with glass transition temperatures below -10°C, wherein the glass transition temperature is determined by means of differential scanning calorimetry according to standard DIN EN 61006 at a heating rate of 10 K/min. with definition of the glass transition temperature as the mid-point temperature.
14. Compositions according to any of the preceding embodiments, wherein component C is at least one graft polymer of
   C.1 25 to 60 % by weight of at least one vinyl monomer on
   C.2 75 to 40 % by weight of a one or more elastomeric graft bases with glass transition temperatures below -20°C wherein the glass transition temperature is determined by means of differential scanning calorimetry according to standard DIN EN 61006 at a heating rate of 10 K/min. with definition of the glass transition temperature as the mid-point temperature.
15. Compositions according to embodiments 13 or 14, wherein component C.2 is selected from the group consisting of diene rubbers, styrene-butadiene block copolymer rubbers, acrylate rubbers, silicone rubbers, silicone/acrylate composite rubbers and ethylene/propylene/diene rubbers.
16. Compositions according to embodiment 15, wherein component C has a core-shell structure and component C.2 is selected from the group consisting of diene rubbers, , acrylate rubber and silicone/acrylate composite rubbers.
17. Compositions according to any of the preceding embodiments, wherein as component D cut glass fibers are used with a sizing selected from the group consisting of epoxy sizing, polyurethane sizing and siloxane sizing.
18. Compositions according to any of the preceding embodiments, wherein the glass fibers according to component D have diameters from 5 to 25 µm.
19. Compositions according to any of the preceding embodiments, wherein the glass fibers according to component D have diameters from 6 to 20 µm.
20. Compositions according to any of the preceding embodiments, wherein the glass fibers according to component D have diameters from 7 to 17 µm.
21. Compositions according to any preceding embodiment, wherein the glass fibers have a length before compounding of from 0.5 to 10 mm.
22. Compositions according to any preceding embodiment, wherein the glass fibers have a length before compounding of from 1 to 8 mm.
23. Compositions according to any preceding embodiment, wherein the glass fibers have a length before compounding of from 3 to 6 mm.
24. Compositions according to any of the preceding embodiments, wherein the weight ratio of component B to component C is at least 1:1.
25. Compositions according to any of the preceding embodiments, comprising
   from 40 to 95% by weight of component A,
   from 0.1 to 10% by weight of component B,
   from 0.1 to 10% by weight of component C,
   from 2 to 40% by weight of component D
   and further comprising from 0 to 10% by weight of other polymeric constituents and/or polymer additives as component E.
26. Compositions according to any of the preceding embodiments, comprising
   from 50 to 90% by weight of component A,
   from 0.5 to 8% by weight of component B,
   from 0.5 to 8% by weight of component C,
   from 5 to 30% by weight of component D
   and further comprising from 0.1 to 8% by weight of other polymeric constituents and/or polymer additives as component E.
27. Compositions according to any of the preceding embodiments, comprising
   from 60 to 85% by weight of component A,
   from 1 to 7% by weight of component B,
   from 1 to 7% by weight of component C,
   from 10 to 25% by weight of component D
   and further comprising from 0.2 to 5% by weight of other polymeric constituents and/or polymer additives as component E.
28. Compositions according to any of the preceding embodiments, wherein the weight ratio of component B to component C is at least 2:1.
29. Compositions according to any of the preceding embodiments, wherein component D comprises pentaerythritol tetrastearate as demoulding agent and as stabilizer, at least one representative selected from the group consisting of sterically hindered phenols, organic phosphites, sulfur-based co-stabilizers and organic and inorganic Brønsted acids.
30. Compositions according to any of the preceding embodiments consisting of at least 90% by weight of components A to E.
31. Compositions according to any of the preceding embodiments consisting only of components A to E.
32. Process for the production of moulding materials, comprising the steps (i), (ii) and optionally (iii), where, in a first step (i)
   Compositions according to any of embodiments 1 to 31
   are heated via introduction of thermal and/or mechanical energy, at least component A) is thus melted, and all of the components used are dispersed and/or dissolved in one another,
      and
   in a further step (ii)
   the melt (ii) resulting from step (i) is solidified by cooling
   and (iii) optionally pelletized,
   where the steps (ii) and (iii) can be carried out in any desired order.
33. Moulding materials obtained or obtainable by a process according to embodiment 32.
34. Use of compositions according to any of embodiments 1 to 31 or moulding materials according to embodiment 33 for the production of moulded articles.
35. Moulded articles comprising compositions according to any of embodiments 1 to 31 or moulding materials according to embodiment 33.

### Examples

### Components used:

### Component A:

A1: Linear polycarbonate based on bisphenol A with weight-average molar mass Mw of 28 000 g/mol determined by gel permeation chromatography in methylene chloride with polycarbonate as standard.

### Component B:

B1: Maleic-anhydride-functionalized ethylene-1-octene copolymer with MAH content of 0.8% by weight and with an ethylene:1-octene ratio of 87:13 mol%, and with weight-average molar mass M_{W} of 200 000 g/mol (Paraloid^{™} EXL 3808 D, producer Dow Chemical).
B2: Maleic-anhydride-functionalized ethylene-1-octene copolymer with MAH content of 0.4% by weight and with an ethylene:1-octene ratio of 83:17 mol%, and with weight-average molar mass M_{W} of 322 000 g/mol (Paraloid^{™} EXL 3815, producer Dow Chemical).

### Component C:

C1: Impact modifier with core-shell structure and with a butadiene rubber as elastomeric graft base (rubber core) (Kane ACE^{™} M732, producer Kaneka).
C2: Impact modifier with core-shell structure and with a silicone-acrylate composite rubber as elastomeric graft base (Metablen^{™} S2001, producer Mitsubishi Rayon)
C3: Impact modifier with core-shell structure and with an acrylate rubber as elastomeric graft base (Paraloid^{™} EXL 2300, producer Dow Chemical).

### Component D:

D1: cut glass fiber with an epoxy sizing based on bisphenol A, an average fiber diameter of 11 µm and an average fiber length of 4.5 mm (CS 7968, producer Lanxess)
D2: cut glass fiber with a polyurethane sizing, an average fiber diameter of 14 µm and an average fiber length of 4.5 mm (CS 7942, producer Lanxess)

### Component E:

E1: : Heat stabilizer, Irganox^{™} B900 (mixture of 80% Irgafos^{™} 168 (tris(2,4-di-tert-butylphenyl) phosphite) and 20% of Irganox^{™} 1076 (2,6-di-tert-butyl-4-(octadecanoxycarbonylethyl)phenol); BASF (Ludwigshafen, Germany).
E2: Demoulding agent, pentaerythritol tetrastearate

### Production and testing of the moulding materials of the invention

The components were mixed in a ZSK-25 twin-screw extruder from Werner & Pfleiderer at a melt temperature of 300°C. The mouldings were produced at a melt temperature of 300°C and a mould temperature of 80°C in an Arburg 270 E injection-moulding machine.

Strain at break was determined with a tensile test at 23°C according to ISO 527 (1996 version)

The impact penetration test to measure maximum force and puncture energy (multi-axial ductility) is carried out at 23 °C on test specimens of dimensions 60 mm x 60 mm x 2 mm in accordance with ISO 6603-2 (2000 version, but without visual inspection of the test specimens).

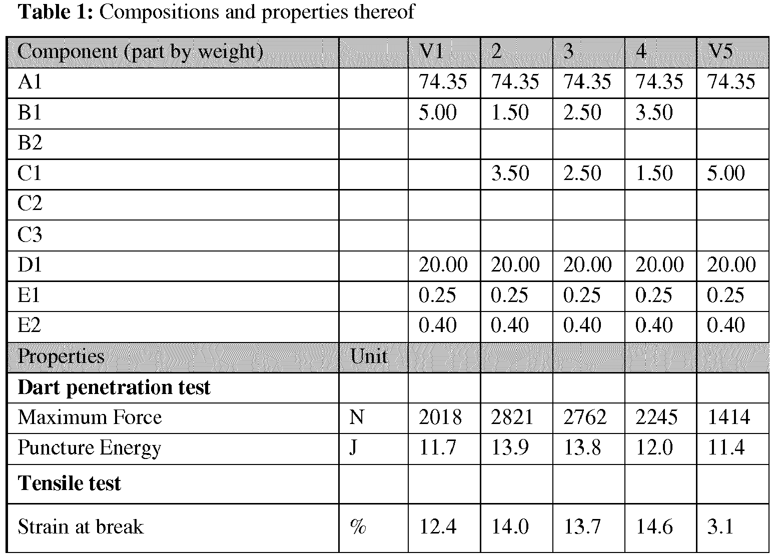

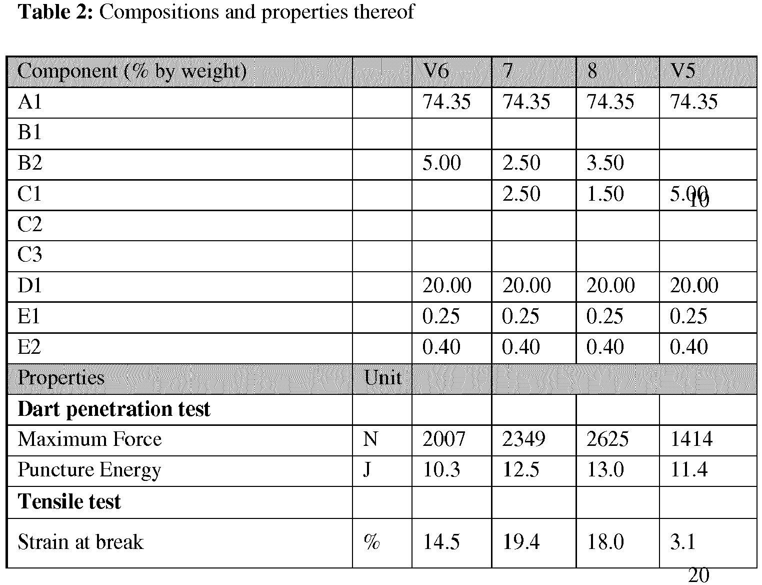

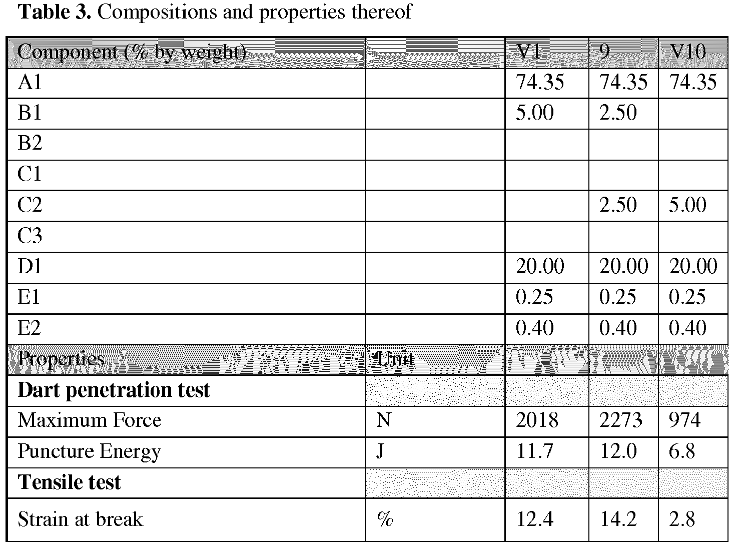

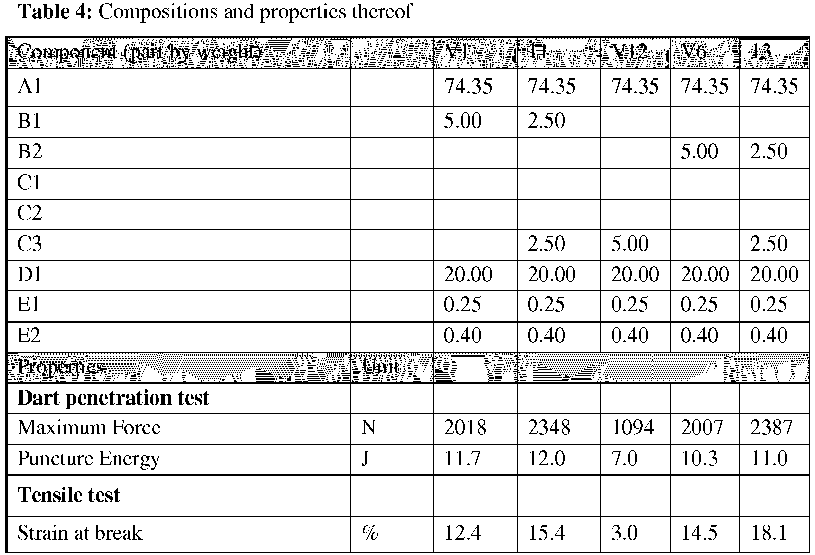

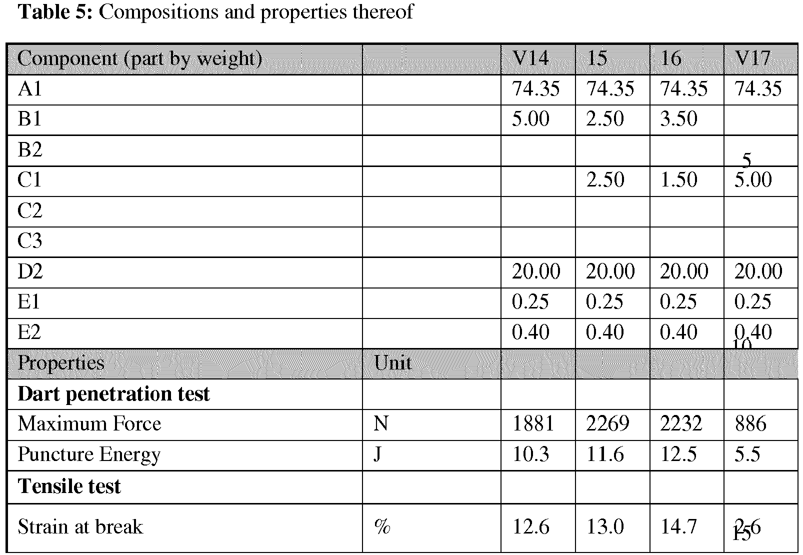

The examples in Table 1 show that the compositions according to the invention (2, 3 and 4) with a mixture of components B and C provide better performance with regard to maximum force, puncture energy, strain at break than the compositions containing only component B (V1) or only component C (V5). The same synergistic effect is observed when component B is adapted with regard to molecular weight, ethylene:1-octene ratio and content of maleic anhydride (table 2, compositions 7 and 8 compared to V6 and V5). Also when the graft base of component C is changed to acrylate rubber or silicone/acrylate composite rubber, the benefits of combining components B and C remain (tables 3 and 4). Finally as apparent from table 5, also with a different glass fiber grade the synergistic property combination when using components B and C is observed.

## Claims

1. Compositions for the production of thermoplastic moulding materials, wherein the compositions comprise the following components:
A) at least one polymer selected from the group consisting of aromatic polycarbonate, aromatic polyester carbonate and polyester,
B) at least one anhydride-functionalized ethylene-α-olefin-copolymer or anhydride-functionalized ethylene-α-olefin terpolymer with a weight-average molar mass M_{w} determined by high-temperature gel permeation chromatography using ortho-dichlorobenzene as solvent against polystyrene standards of 50000 to 500000 g/mol,
C) at least one rubber-modified graft polymer,
D) glass fibers.

2. Compositions according to claim 1, wherein component B has from 2 to 40 mol% of α-olefin units and from 60 to 98 mol% of ethylene units, based on the entirety of α-olefin and ethylene.

3. Compositions according to any of the preceding claims, wherein the anhydride content of component B is from 0.1 to 3.0% by weight.

4. Compositions according to any of the preceding claims, wherein component B is a maleic-anhydride-functionalized copolymer of ethylene and 1-octene.

5. Compositions according to any of the preceding claims, wherein component C is at least one graft polymer of
C.1 5 to 95 % by weight of at least one vinyl monomer on
C.2 5 to 95 % by weight of a one or more elastomeric graft bases with glass transition temperatures below -10°C, wherein the glass transition temperature is determined by means of differential scanning calorimetry according to standard DIN EN 61006 at a heating rate of 10 K/min. with definition of the glass transition temperature as the mid-point temperature.

6. Compositions according to claim 5, wherein component C.2 is selected from the group consisting of diene rubbers, styrene-butadiene block copolymer rubbers, acrylate rubbers, silicone rubbers, silicone/acrylate composite rubbers and ethylene/propylene/diene rubbers.

7. Compositions according to claim 6, wherein component C has a core-shell structure and component C.2 is selected from the group consisting of diene rubbers, acrylate rubber and silicone/acrylate composite rubbers.

8. Compositions according to any of the preceding claims, wherein as component D cut glass fibers are used with a sizing selected from the group consisting of epoxy sizing, polyurethane sizing and siloxane sizing.

9. Compositions according to any of the preceding claims, wherein the glass fibers according to component D have diameters from 5 to 25 µm.

10. Compositions according to any of the preceding claims, wherein the weight ratio of component B to component C is at least 1:1.

11. Compositions according to any of the preceding claims, comprising
from 40 to 95% by weight of component A,
from 0.1 to 10% by weight of component B,
from 0.1 to 10% by weight of component C,
from 2 to 40% by weight of component D
and further comprising from 0 to 10% by weight of other polymeric constituents and/or polymer additives as component E.

12. Process for the production of moulding materials, comprising the steps (i), (ii) and optionally (iii), where, in a first step (i)
Compositions according to any of claims 1 to 11
are heated via introduction of thermal and/or mechanical energy, at least component A) is thus melted, and all of the components used are dispersed and/or dissolved in one another,
and
in a further step (ii)
the melt (ii) resulting from step (i) is solidified by cooling
and (iii) optionally pelletized,
where the steps (ii) and (iii) can be carried out in any desired order.

13. Moulding materials obtained or obtainable by a process according to claim 12.

14. Use of compositions according to any of claims 1 to 11 or moulding materials according to Claim 13 for the production of moulded articles.

15. Moulded articles comprising compositions according to any of claims 1 to 11 or moulding materials according to Claim 13.

## Patentansprüche

1. Zusammensetzungen zur Erzeugung von thermoplastischen Formmassen, wobei die Zusammensetzungen folgende Bestandteile enthalten:
A) mindestens ein Polymer ausgewählt aus der Gruppe bestehend aus aromatischem Polycarbonat, aromatischem Polyestercarbonat und Polyester,
B) mindestens ein mit einem Anhydrid funktionalisiertes Ethylen-α-Olefin-Copolymer oder mit einem Anhydrid funktionalisiertes Ethylen-α-Olefin-Terpolymer mit einem gewichtsgemittelten Molekulargewicht M_{w}, bestimmt durch Hochtemperatur-Gelpermeationschromatographie mit ortho-Dichlorbenzol als Lösungsmittel gegen Polystyrol-Standards von 50.000 bis 500.000 g/mol,
C) mindestens ein kautschukmodifiziertes Pfropfpolymer,
D) Glasfasern.

2. Zusammensetzungen gemäß Anspruch 1, wobei die Komponente B 2 bis 40 Mol-% α-Olefin-Einheiten und 60 bis 98 Mol-% Ethylen-Einheiten, bezogen auf die Summe von α-Olefin und Ethylen, aufweist.

3. Zusammensetzungen gemäß einem der vorherigen Ansprüche, wobei die Komponente B einen Gehalt an Anhydrid von 0,1 bis 3,0 Gew.-% aufweist.

4. Zusammensetzungen gemäß einem der vorherigen Ansprüche, wobei die Komponente B ein mit Maleinsäureanhydrid funktionalisiertes Copolymer aus Ethylen und 1-Octen ist.

5. Zusammensetzungen gemäß einem der vorherigen Ansprüche, wobei die Komponente C mindestens ein Pfropfpolymer aus
C.1 5 bis 95 Gew.-% wenigstens eines Vinylmonomers auf
C.2 5 bis 95 Gew.-% einer oder mehrerer kautschukelastischer Pfropfgrundlagen mit einer Glasübergangstemperatur unter -10 °C, wobei die Glasübergangstemperatur mittels dynamischer Differenzkalorimetrie (DSC) nach der Norm DIN EN 61006 bei einer Heizrate von 10 K/min mit Bestimmung der Glasübergangstemperatur als Mittelpunkttemperatur bestimmt wird,
ist.

6. Zusammensetzungen gemäß Anspruch 5, wobei Komponente C.2 aus der Gruppe bestehend aus Dienkautschuken, StyrolButadien-Blockcopolymer-Kautschuken, Acrylatkautschuken, Silikonkautschuken, Silikon-Acrylat-Kompositkautschuken und Ethylen-Propylen-Dien-Kautschuken ausgewählt ist.

7. Zusammensetzungen gemäß Anspruch 6, wobei Komponente C eine Kern-Schale-Struktur aufweist und Komponente C.2 aus der Gruppe bestehend aus Dienkautschuken, Acrylatkautschuken und Silikon-Acrylat-Kompositkautschuken ausgewählt ist.

8. Zusammensetzungen gemäß einem der vorherigen Ansprüche, wobei als Komponente D Schnittglasfasern mit einer Schlichte ausgewählt aus der Gruppe bestehend aus Epoxidharz-Schlichte, Polyurethan-Schlichte und Siloxan-Schlichte verwendet werden.

9. Zusammensetzungen gemäß einem der vorherigen Ansprüche, wobei die Glasfasern gemäß Komponente D Durchmesser von 5 bis 25 µm aufweisen.

10. Zusammensetzungen gemäß einem der vorherigen Ansprüche, wobei das Gewichtsverhältnis von Komponente B zu Komponente C mindestens 1:1 beträgt.

11. Zusammensetzungen gemäß einem der vorherigen Ansprüche, enthaltend
40 bis 95 Gew.-% Komponente A,
0,1 bis 10 Gew.-% Komponente B,
0,1 bis 10 Gew.-% Komponente C,
2 bis 40 Gew.-% Komponente D,
und ferner umfassend 0 bis 10 Gew.-% andere polymere Bestandteile und/oder Polymeradditive als Komponente E.

12. Verfahren zur Erzeugung von Formmassen, enthaltend die Schritte (i), (ii) und gegebenenfalls (iii), wobei in einem ersten Schritt (i)
Zusammensetzungen gemäß einem der Ansprüche 1 bis 11
durch Zuführung thermischer und/oder mechanischer Energie aufgeheizt werden, mindestens die Komponente A) dadurch aufgeschmolzen wird und alle Komponenten ineinander dispergiert und/oder gelöst werden,
und
in einem weiteren Schritt (ii)
die aus Schritt (i) erhaltene Schmelze (ii) durch Abkühlen verfestigt
und (iii) gegebenenfalls pelletiert wird,
wobei die Verfahrensschritte (ii) und (iii) in beliebiger Reihenfolge durchgeführt werden können.

13. Formmassen, erhalten oder erhältlich nach einem Verfahren gemäß Anspruch 12.

14. Verwendung von Zusammensetzungen gemäß einem der Ansprüche 1 bis 11 oder Formmassen gemäß Anspruch 13 zur Herstellung von Formkörpern.

15. Formkörper, umfassend Zusammensetzungen gemäß einem der Ansprüche 1 bis 11 oder Formmassen gemäß Anspruch 13.

## Revendications

1. Compositions pour la production de matériaux de moulage thermoplastiques, les compositions comprenant les composants suivants :
A) au moins un polymère choisi dans le groupe constitué par un polycarbonate aromatique, un polyestercarbonate aromatique et un polyester,
B) au moins un copolymère d'éthylène-α-oléfine fonctionnalisé par anhydride ou terpolymère d'éthylène-α-oléfine fonctionnalisé par anhydride doté d'une masse molaire moyenne en poids M_{w}, déterminée par chromatographie à perméation de gel à haute température en utilisant de l'ortho-dichlorobenzène en tant que solvant par rapport à des références de polystyrène, de 50 000 à 500 000 g/mole,
C) au moins un polymère greffé modifié par un caoutchouc,
D) des fibres de verre.

2. Compositions selon la revendication 1, le composant B possédant de 2 à 40 % en moles de motifs d'a-oléfine et de 60 à 98 % en moles de motifs d'éthylène, sur la base de la totalité d'a-oléfine et d'éthylène.

3. Compositions selon l'une quelconque des revendications précédentes, la teneur en anhydride du composant B étant de 0,1 à 3,0 % en poids.

4. Compositions selon l'une quelconque des revendications précédentes, le composant B étant un copolymère d'éthylène et de 1-octène fonctionnalisé par l'anhydride maléique.

5. Compositions selon l'une quelconque des revendications précédentes, le composant C étant au moins un polymère greffé de
C.1 5 à 95 % en poids d'au moins un monomère vinylique sur
C.2 5 à 95 % en poids d'une ou plusieurs bases de greffage élastomériques dotées de températures de transition vitreuse inférieures à -10 °C, la température de transition vitreuse étant déterminée au moyen d'une calorimétrie différentielle à balayage selon la norme DIN EN 61006 à une vitesse de chauffage de 10 K/min., la définition de la température de transition vitreuse étant la température de point milieu.

6. Compositions selon la revendication 5, le composant C.2 étant choisi dans le groupe constitué par des caoutchoucs de diène, des caoutchoucs de copolymère à blocs de styrène-butadiène, des caoutchoucs d'acrylate, des caoutchoucs de silicone, des caoutchoucs composites de silicone/acrylate et des caoutchoucs d'éthylène/propylène/diène.

7. Compositions selon la revendication 6, le composant C possédant une structure de type noyau-enveloppe et le composant C.2 étant choisi dans le groupe constitué par des caoutchoucs de diène, un caoutchouc d'acrylate et des caoutchoucs composites de silicone/acrylate.

8. Compositions selon l'une quelconque des revendications précédentes, dans lesquelles, en tant que composant D, des fibres de verre coupées sont utilisées dotées d'un ensimage choisi dans le groupe constitué par un ensimage d'époxy, un ensimage de polyuréthane et un ensimage de siloxane.

9. Compositions selon l'une quelconque des revendications précédentes, les fibres de verre selon le composant D possédant des diamètres de 5 à 25 µm.

10. Compositions selon l'une quelconque des revendications précédentes, le rapport en poids du composant B sur le composant C étant d'au moins 1 : 1.

11. Compositions selon l'une quelconque des revendications précédentes, comprenant
de 40 à 95 % en poids de composant A,
de 0,1 à 10 % en poids de composant B,
de 0,1 à 10 % en poids de composant C,
de 2 à 40 % en poids de composant D et comprenant en outre de 0 à 10 % en poids d'autres constituants polymériques et/ou additifs de polymère en tant que composant E.

12. Procédé pour la production de matériaux de moulage, comprenant les étapes (i), (ii) et éventuellement (iii), où, dans une première étape (i)
des compositions selon l'une quelconque des revendications 1 à 11 sont chauffées via une introduction d'énergie thermique et/ou mécanique, au moins le composant A) étant ainsi fondu, et tous les composants utilisés étant dispersés et/ou dissous les uns dans les autres,
et
dans une étape supplémentaire (ii)
la masse fondue (ii) résultant de l'étape (i) est solidifiée par refroidissement
et (iii) éventuellement mise sous forme de pastilles, où les étapes (ii) et (iii) peuvent être mises en œuvre dans un quelconque ordre souhaité.

13. Matériaux de moulage obtenus ou pouvant être obtenus par un procédé selon la revendication 12.

14. Utilisation de compositions selon l'une quelconque des revendications 1 à 11 ou de matériaux de moulage selon la revendication 13 pour la production d'articles moulés.

15. Articles moulés comprenant des compositions selon l'une quelconque des revendications 1 à 11 ou des matériaux de moulage selon la revendication 13.
